# EUROPÄISCHE PATENTSCHRIFT

(11) **EP 1 551 093 B1**
(45) Veröffentlichungstag und Bekanntmachung des Hinweises auf die Patenterteilung: **26.09.2012**
(21) Anmeldenummer: 04105878.5
(22) Anmeldetag: 18.11.2004
(51) Int. Cl.: H02K 11/04

(54) **Gleichrichtereinrichtung und Drehstromgenerator**
Rectifier and alternating current generator
Redresseur et alternateur

(30) Priorität: 30.12.2003 DE 10361862
(43) Veröffentlichungstag der Anmeldung: 06.07.2005
(73) Patentinhaber: ROBERT BOSCH GMBH, 70442 Stuttgart (DE)
(72) Erfinder: Lechner, Juergen, 71665, Vaihingen/Enz (DE); Scholzen, Holger, 70469, Stuttgart (DE); Haegele, Hardy, 76646, Bruchsal (DE)

(56) Entgegenhaltungen:
- EP-A- 1 180 845
- DE-B- 1 130 058
- US-A- 5 296 770

## Beschreibung

### Stand der Technik

Aus dem Stand der Technik sind die deutsche Offenlegungsschrift DE 40 18 710 A1 und die parallele US 5,296,770 bekannt. Aus diesen beiden Schriften ist ein Drehstromgenerator mit einer Gleichrichtereinrichtung bekannt, die aus zwei Gleichrichtern besteht, die jeweils ein Dreiphasensystem und deren Ständerspannungen gleichrichtet. Es ist dort eine Anschlussplatte bekannt, die als Stromschienenplatte bezeichnet ist. Diese Stromschienenplatte verfügt über Stromschienen, die gemäß der Beschreibung jeweils paarweise Plus- und Minusdioden miteinander verbindet. Diese Verbindungsleiter sind nicht Verbindungsleiter, die zur elektrischen Verbindung der Gleichrichtereinrichtung mit einem Regler vorgesehen sind.

Das Dokument EP 11 80 845 A2 zeigt einen Generator bei dem Ständeranschlussdrähte mittels einer Schraube an ein Anschlusselement einer Gleichrichtereinrichtung angeschlossen wird.

Des Weiteren ist die DE 1130 058 B bekannt.

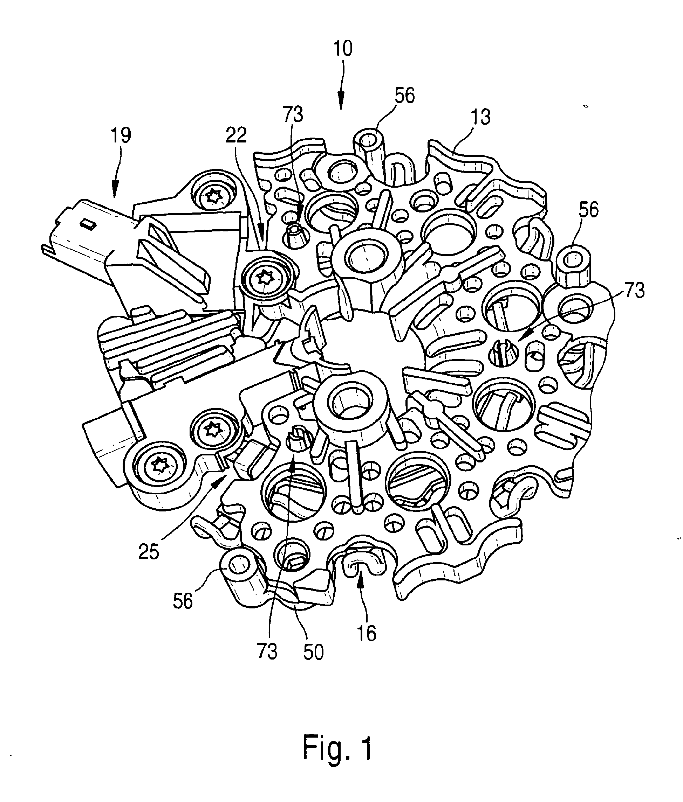

In Figur 1 ist eine räumliche Ansicht eines Teils einer Gleichrichtereinrichtung 10 dargestellt. Dieses besteht aus einem grossflächigen gelochten Pluskühlkörper 13 und einer darunter angeordneten Anschlussplatte 16. Diese Anschlussplatte 16 dient dazu, hier nicht dargestellte der Stromgleichrichtung dienende Dioden miteinander zu verschalten, so dass eine Brückenschaltung zur Gleichrichtung entsteht.

Eine Reglereinrichtung 19 wird einerseits mittels einer Schraubverbindung 22 mit dem positiven Spannungsniveau des Kühlkörpers 13 verbunden. Andererseits ist die Reglereinrichtung 19 über einen sogenannten V-Anschluss 25 mit der Anschlussplatte 16 mechanisch und elektrisch leitfähig verbunden.

Über hier nicht dargestellte Leiterelemente ist die Anschlussplatte 16 bzw. jede in der Gleichrichtereinrichtung 10 verwirklichte Brückenschaltung mit einer der drei Phasen verbunden.

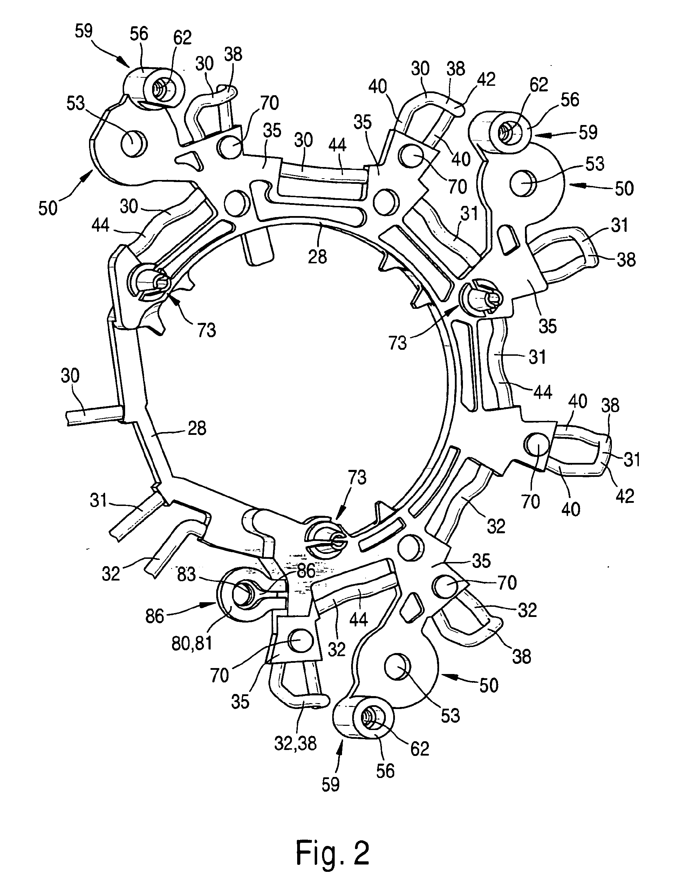

In Figur 2 ist die Anschlussplatte 16 dargestellt. Die Anschlussplatte 16 weist einen ringförmigen Bereich auf. Dieser Ringbereich 28 besteht aus einem isolierenden Material, insbesondere einem Kunststoff, der in verschiedenen Abschnitten des Ringbereichs 28 darin teilweise eingebettete Leiter 30, 31 und 32 gegen äussere Einflüsse isoliert. Diese Leiter 30,31 und 32 dienen zur Verschaltung der Anschlussplatte 16 mit den Strängen beziehungsweise Phasen eines Ständers und den Gleichrichterdioden.

Von dieser allgemein ringförmigen Anschlussplatte 16 gehen über deren Umfang verteilt insgesamt sechs Stutzen 35 aus. Diese einstückig angeformten Stutzen 35 nehmen in sich wiederum Abschnitte der Leiter 30 oder 31 oder 32 auf. Diese Leiter sind jeweils so geformt, dass eine U-förmige Schlaufe 38 von je einem Stutzen 35 ausgeht. Diese Schlaufen 38 treten zunächst mit zwei Schenkeln 40 aus einem Stutzen 35 im wesentlichen in radialer Richtung aus. Anschliessend sind die Schenkel 40 so gebogen, dass diese im wesentlichen sich in axialer Richtung erstrecken und gemeinsam einen Teilringbogen 42 der U-förmigen Schlaufe 38 bilden. Die U-förmigen Schlaufen 38 dienen dazu, Diodenkopfdrähte von Minusdioden anschweissen oder anlöten zu können.

Einem jeden Stutzen 35 ist darüber hinaus mindestens ein wellenförmiger Drahtabschnitt 44 benachbart. Je eine Schlaufe 38 und je ein wellenförmiger Drahtabschnitt 44 eines Leiters 30, 31 oder 32 dienen dazu jeweils eine Teilbrücke Gleichrichtereinrichtung darzustellen. Mit der in Figur 2 dargestellten Anschlussplatte 16 ist es somit möglich insgesamt sechs Minus- und sechs Plusdioden zu einer Gleichrichtereinrichtung zu verbinden. So können beispielsweise die zwei wellenförmigen Drahtabschnitte 44 und die zwei Schlaufen 38 des Leiters 30 zu zwei parallelgeschalteten Teilbrücken zur Gleichrichtung eines Strangs verschaltet sein. Analog dazu gilt dies für die je zwei wellenförmigen Drahtabschnitte 44 und die je zwei Schlaufen 38 des Leiters 31 und des Leiters 32.

Sind wegen geringerer Strömstärke je Teilbrückenschaltung nur eine Plus- und eine Minusdiode erforderlich, so ist es ausreichend nur einen wellenförmigen Drahtabschnitt 44 und eine Schlaufe 30 je Teilbrückenschaltung und Strang zur Verschaltung zu verwenden.

Die wellenförmigen Drahtabschnitte 44 sind als im wesentlichen zum ringförmigen Bereich 28 paralleler Ring ausgebildet.

Von einigen Stutzen 35, im Beispiel sind es drei, gehen einstückig je eine Ringscheibe 50 aus. Diese Ringscheibe 50 ist im wesentlichen in der gleichen Ebene wie der ringförmige Bereich 28 angeordnet. Die Ringscheiben 50 dienen dazu zwischen dem Pluskühlkörper 13 und einem Lagerschild des Generators angeordnet zu werden. Ein Loch 53 in der Mitte der Ringscheibe 50 ermöglicht das Hindurchführen eines Bolzenelements und somit die Befestigung der Anschlussplatte 16.

Von einer jeden Ringscheibe 50 kann ein sich axial erstreckender und ebenfalls einstückig angeformter Stutzen 56 ausgehen. Dieser Stutzen 56 hat ein sich axial erstreckendes Loch 59, das vorzugsweise mit einem Gewinde 62 ausgestattet ist. Dieses Loch dient der Aufnahme einer hier nicht dargestellten Schraube, die in das Gewinde eingreift oder selbst ein Gewinde im Loch 59 einschneidet. Mit Hilfe der Stutzen 56 ist eine Schutzkappe über dem Pluskühlkörper 13 befestigt.

Von den Stutzen 35 ausgehend erstrecken sich in axialer Richtung Podeste 70, die als Abstandshalter zwischen Anschlussplatte 16 und Pluskühlkörper 13 dienen.

Des Weiteren sind an der Anschlussplatte 16 im Beispiel drei Schnappelemente 73 einstückig angeformt. Durch diese Schnappelemente 73 ist die Anschlussplatte 16 mit dem Pluskühlkörper 13 zu einer Vormontagegruppe zu verbinden. Hierzu greifen die Schnappelemente 73 in Löcher des Pluskühlkörpers 13 ein. Die Anwendung ist nicht auf einen Pluskühlkörper 13 beschränkt und ist ggf. auch bei einem Minuskühlkörper anwendbar.

Von dem Leiter 32 ist einer seiner Abschnitte als Verbindungsleiter 80 ausgeformt. Dieser Verbindungsleiter 80 ist als eine Art Öse 81 mit einem ringförmigen Verlauf des Drahts ausgeformt und dient dazu, eine elektrische Verbindung zwischen der Gleichrichtereinrichtung 10 und der Reglereinrichtung 19 herzustellen. Dieser Verbindungsleiter 80 ist so gestaltet, das dieser ein Schraubeninnengewinde 83 trägt.

Es ist somit eine Gleichrichtereinrichtung 10, insbesondere für einen Drehstromgenerator für ein Kraftfahrzeug, vorgesehen, die zur Gleichrichtung der elektrischen Ströme dreier Phasen bzw. Stränge dient, mit einer Anschlussplatte 16, die die drei Phasen mit Gleichrichterdioden elektrisch verschaltet, wobei die Anschlussplatte 16 einen elektrischen Verbindungsleiter 80 hat, der zur elektrischen Verbindung der Gleichrichtereinrichtung 10 mit einem Regler 19 vorgesehen ist, wobei der Verbindungsleiter 80 aus mindestens einem Leiterelement besteht, das ein sich axial erstreckendes Schraubeninnengewinde 83 trägt. Die axiale Erstreckung bezieht sich auf die Drehachse des Generatorläufers.

Es ist dabei vorgesehen, dass der Verbindungsleiter 80 beziehungsweise das Leiterelement des Verbindungsleiters 80 mit einem separaten Anschlussteil 86 stoffschlüssig verbunden ist, wobei das Anschlussteil 86 das Schraubeninnengewinde 83 aufweist. Dazu ist das Leiterelement des Verbindungsleiters 80 zur Aufnahme des Anschlussteils 86 in einem Bereich ringförmig ausgeführt und das Anschlussteil 86 an diesem ringförmigen Bereich aufgenommen.

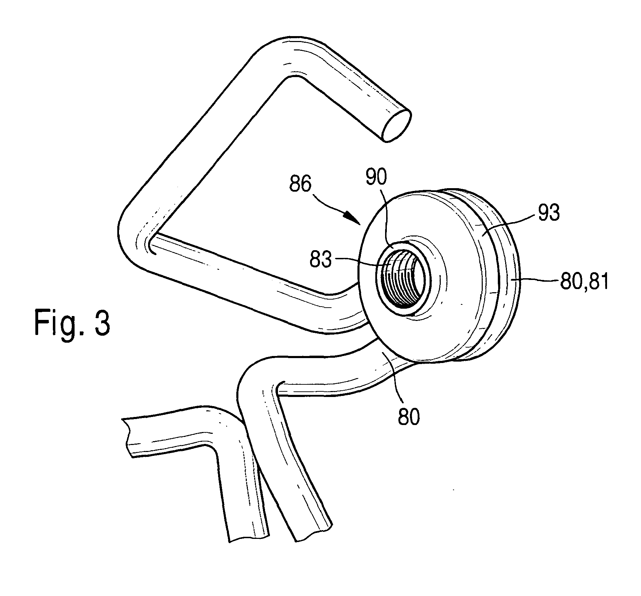

Figur 3 zeigt in einer vergrößerten Darstellung den Verbindungsleiter 80 und seine ösenartige Ausformung, bzw. den ringförmigen Bereich 81. Das Anschlussteil 86 weist einen runden, ringförmigen Plattenbereich 93 und einen buchsenförmigen Bereich 90.

Das Anschlussteil 86 hat einen buchsenförmigen Bereich 90 , der das Schraubeninnengewinde 83 trägt, und mit einem Plattenbereich 93 einstückig verbunden ist, der mit dem ringförmigen Bereich in einer Fuge zwischen Leiterelement und Anschlussteil 86 stoffschlüssig, bspw. durch Widerstandsschweißen, verbunden ist.

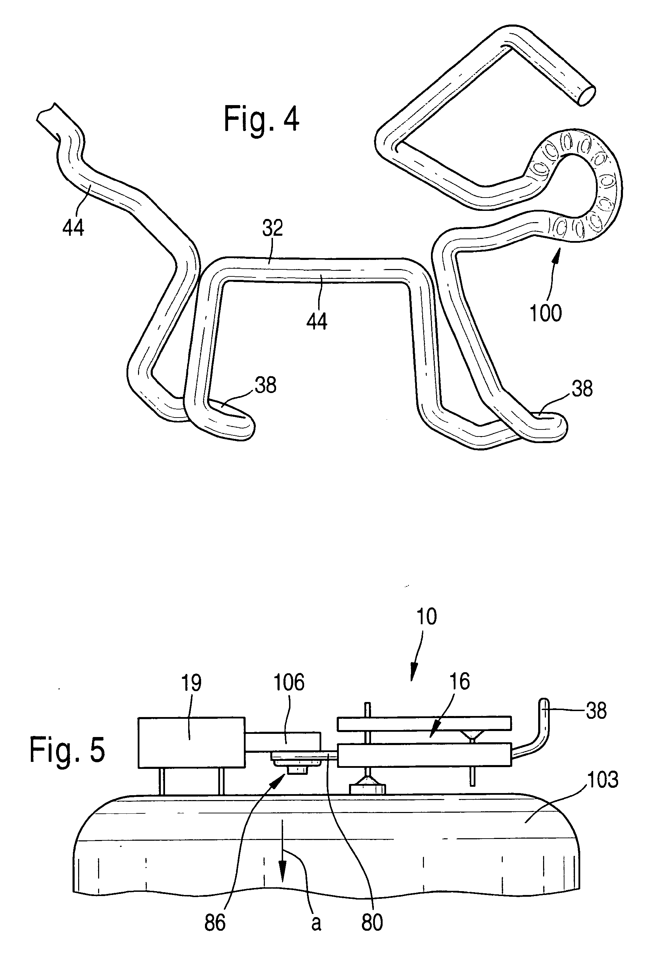

Der ringförmige Bereich 81 des Leiterelements weist auf einer dem Anschlussteil 86 zugewandten Seite eine Anprägung 100 auf, s. a. Figur 4. Durch das Anprägen ist der Leiter 32 hier abgeflacht und weist nun einige strahlenförmige, sich radial erstreckende Erhebungen auf, die über den Verlauf des Leiters 32 insgesamt eine wellenförmigen Anprägung 100 ergeben.

Es ist vorgesehen, dass der V-Anschluss 25 bzw. der Phase axial unter dem Regler 19 sitzt. Dies ermöglicht einen in Bezug zur Generator- bzw. Läuferachse axialen Fügevorgang. Der Regler 19 wird somit mit seinem Anschluss auf den Verbindungsleiter 80 axial aufgesetzt. Das Anschlussteil 86 sitzt hinter dem Verbindungsleiter 80 und somit auf der dem Regler 19 abgewandten Seite des Verbindungsleiters 80.

Es wird ein Drehstromgenerator für Kraftfahrzeuge vorgeschlagen, mit einem Lagerschild 103, auf dem eine Reglereinrichtung 19 und eine Gleichrichtereinrichtung 10 befestigt sind, wobei die Reglereinrichtung 19 mittels eines Verbindungsleiters 80 elektrisch kontaktiert ist, der aus mindestens einem Leiterelement besteht, das ein Schraubeninnengewinde 83 trägt, wobei der Verbindungsleiter zwischen dem Lagerschild 103 und einer Reglerverbindungsstelle 106 angeordnet ist, s. a. Figur 5. Die Reglerverbindungsstelle 106, der Verbindungsleiter 80 und das Lagerschild 103 sind also in axialer Richtung a nacheinander angeordnet

## Patentansprüche

1. Drehstromgenerator für ein Kraftfahrzeug mit einem Generatorläufer, der eine Drehachse aufweist, mit einer Gleichrichtereinrichtung zur Gleichrichtung der elektrischen Ströme dreier Phasen, mit einer Anschlussplatte (16), die die drei Phasen mit Gleichrichterdioden elektrisch verschaltet, wobei die Anschlussplatte (16) einen elektrischen Verbindungsleiter (80) hat, der zur elektrischen Verbindung der Gleichrichtereinrichtung (10) mit einem Regler (19) vorgesehen ist, **dadurch gekennzeichnet, dass** der Verbindungsleiter (80) aus mindestens einem Leiterelement besteht, das ein sich in Richtung der Drehachse des Generatorläufers axial erstreckendes Schraubeninnengewinde (83) trägt.

2. Drehstromgenerator nach Anspruch 1, **dadurch gekennzeichnet, dass** das Leiterelement mit einem separaten Anschlussteil (86) stoffschlüssig verbunden ist, wobei das Anschlussteil (86) das Schraubeninnengewinde (83) aufweist.

3. Drehstromgenerator nach Anspruch 2, **dadurch gekennzeichnet, dass** das Leiterelement in einem Bereich ringförmig ausgeführt ist und das Anschlussteil (86) an diesem ringförmigen Bereich aufgenommen ist.

4. Drehstromgenerator nach Anspruch 1 oder 2, **dadurch gekennzeichnet dass** das Anschlussteil (86) einen buchsenförmigen Bereich hat, der das Schraubeninnengewinde (83) trägt, und mit einem Plattenbereich (93) einstückig verbunden ist, der mit dem ringförmigen Bereich in einer Fuge (96) zwischen Leiterelement und Anschlussteil (86) stoffschlüssig verbunden ist.

5. Drehstromgenerator nach Anspruch 1, 2 oder 3, **dadurch gekennzeichnet, dass** der ringförmige Bereich des Leiterelements auf einer dem Anschlussteil (86) zugewandten Seite eine Anprägung (100) aufweist.

6. Drehstromgenerator nach Anspruch 5, **dadurch gekennzeichnet, dass** die Anprägung (100) wellenförmig ist.

## Claims

1. Three-phase generator for a motor vehicle, having a generator rotor which has a rotation axis, having a rectifier device for rectifying the electric currents of three phases, having a connection plate (16) which electrically connects the three phases to rectifier diodes, wherein the connection plate (16) has an electrical connecting conductor (80) which is provided for electrically connecting the rectifier device (10) to a controller (19), **characterized in that** the connecting conductor (80) comprises at least one conductor element which is provided with an internal screw thread (83) which extends in the direction of the rotation axis of the generator rotor.

2. Three-phase generator according to Claim 1, **characterized in that** the conductor element is cohesively connected to a separate connection part (86), wherein the connection part (86) has the internal screw thread (83).

3. Three-phase generator according to Claim 2, **characterized in that** the conductor element is of annular design in one region, and the connection part (86) is accommodated at this annular region.

4. Three-phase generator according to Claim 1 or 2, **characterized in that** the connection part (86) has a bushing-like region which is provided with the internal screw thread (83), and is integrally connected to a plate region (93) which is cohesively connected to the annular region in a joint (96) between the conductor element and the connection part (86).

5. Three-phase generator according to Claim 1, 2 or 3, **characterized in that** the annular region of the conductor element has a stamped portion (100) on a side which faces the connection part (86).

6. Three-phase generator according to Claim 5, **characterized in that** the stamped portion (100) is corrugated.

## Revendications

1. Générateur de courants tournants pour véhicule automobile, le générateur présentant
un induit de générateur doté d'un axe de rotation, un dispositif redresseur qui redresse les courants électriques de trois phases,
une plaque de raccordement (16) qui raccorde électriquement les trois phases à des diodes redresseuses,
la plaque de raccordement (16) possédant un conducteur (80) de raccordement électrique prévu pour raccorder électriquement le dispositif redresseur (10) à un régulateur (19),
**caractérisé en ce que**
le conducteur de raccordement (80) est constitué d'au moins un élément conducteur qui porte un filet hélicoïdal intérieur (83) qui s'étend axialement dans la direction de l'axe de rotation de l'induit du générateur.

2. Générateur de courants tournants selon la revendication 1, **caractérisé en ce que** l'élément conducteur est relié en correspondance de matière à une pièce de raccordement (86) séparée, la pièce de raccordement (86) présentant le filet hélicoïdal intérieur (83).

3. Générateur de courants tournants selon la revendication 2, **caractérisé en ce que** l'élément conducteur présente une partie de forme annulaire et **en ce que** la pièce de raccordement (86) est reprise sur cette partie annulaire.

4. Générateur de courants tournants selon les revendications 1 ou 2, **caractérisé en ce que** la pièce de raccordement (86) présente une partie en douille qui porte le filet hélicoïdal intérieur (83) et est reliée d'un seul tenant à une partie en plaque (93) reliée en correspondance de matière à la partie annulaire au niveau d'un joint (96) situé entre l'élément conducteur et la pièce de raccordement (86).

5. Générateur de courants tournants selon les revendications 1, 2 ou 3, **caractérisé en ce que** la partie annulaire de l'élément conducteur présente un gaufrage (100) sur son côté tourné vers la pièce de raccordement (86).

6. Générateur de courants tournants selon la revendication 5, **caractérisé en ce que** le gaufrage (100) est de forme ondulée.
